# EUROPÄISCHE PATENTSCHRIFT

(11) **EP 1 389 557 B1**
(45) Veröffentlichungstag und Bekanntmachung des Hinweises auf die Patenterteilung: **21.12.2005**
(21) Anmeldenummer: 03016294.5
(22) Anmeldetag: 18.07.2003
(51) Int. Cl.: B60N 2/07

(54) **Längseinsteller für einen Fahrzeugsitz**
Longitudinal adjuster for a vehicle seat.
Dispositif de réglage longitudinal pour un siège de véhicule.

(30) Priorität: 07.08.2002 DE 10236067
(43) Veröffentlichungstag der Anmeldung: 18.02.2004
(73) Patentinhaber: KEIPER GmbH & Co. KG, 67657 Kaiserslautern (DE)
(72) Erfinder: Strubel, Peter, 55237 Flonheim (DE); Goy, Reinhard, 67657 Kaiserslautern (DE); Schäffling, Ulf, 67822 Gaugrehweiler (DE); Krebs, Jürgen, 67806 Rockenhausen (DE)
(74) Vertreter: Patentanwälte Hosenthien-Held und Dr. Held

(56) Entgegenhaltungen:
- DE-A- 4 105 231
- DE-A- 10 142 994
- DE-A- 19 804 506
- US-A- 2 780 501
- US-A- 5 222 814

## Beschreibung

Die Erfindung betrifft einen Längseinsteller für einen Fahrzeugsitz, insbesondere für einen Kraftfahrzeugsitz, mit den Merkmalen des Oberbegriffs des Anspruches 1.

Bei einem aus der DE 199 22 294 A1 bekannten Längseinsteller dieser Art unterstützt das Verkrallungsteil die wechselseitige Verkrallung der Sitzschienen. Der maximale Verschiebeweg der zweiten Sitzschiene wird durch Anschläge begrenzt, beispielsweise durch die Befestigungsschrauben der Sitzschienen. Ein dachförmiges Element, welches wie die Befestigungsschrauben mittig an einer der Sitzschienen angeordnet ist und welches als Anschlag dient, ist in der EP 1291233 A1 beschrieben.

Der Erfindung liegt die Aufgabe zu Grunde, einen Längseinsteller der eingangs genannten Art zu verbessern. Diese Aufgabe wird erfindungsgemäß durch einen Längseinsteller mit den Merkmalen des Anspruches 1 gelöst. Vorteilhafte Ausgestaltungen sind Gegenstand der Unteransprüche.

Dadurch, dass die erste Sitzschiene eine Anschlagplatte mit ersten Anschlagflächen aufweist, welche mit zweiten Anschlagflächen des Verkrallungsteils zur Begrenzung der Bewegung der Sitzschiene zusammenwirken, wobei die Anschlagflächen in Schienenquerrichtung versetzt zu Befestigungspunkten der Anschlagplatte und/oder der ersten Sitzschiene angeordnet sind, kann gezielt ein Anschlag zur Verfügung gestellt werden, der unabhängig von den Positionen der Befestigungsschrauben ist.

Der maximale Verschiebeweg kann dadurch für den Anwendungsfall individuell ausgewählt werden, d.h. es können verschiedene maximale Verschiebewege realisiert werden, ohne daß die Herstellungswerkzeuge für die eigentliche Sitzschiene, welche immer die gleiche ist, oder die Montagewerkzeuge für den Zusammenbau besonders einstellbar sein müssen. Hierfür ist die gesondert ausgebildete Anschlagplatte vorzugsweise aus einem Satz unterschiedlicher Anschlagplatten auswählbar und mit wenigstens zwei verschiedenen Orientierungen an der ersten Sitzschiene anbringbar. Für eine einfache Herstellung der Anschlagplatte und des Verkrallungsteils sind die Anschlagflächen an seitlich angeformten Laschen ausgebildet.

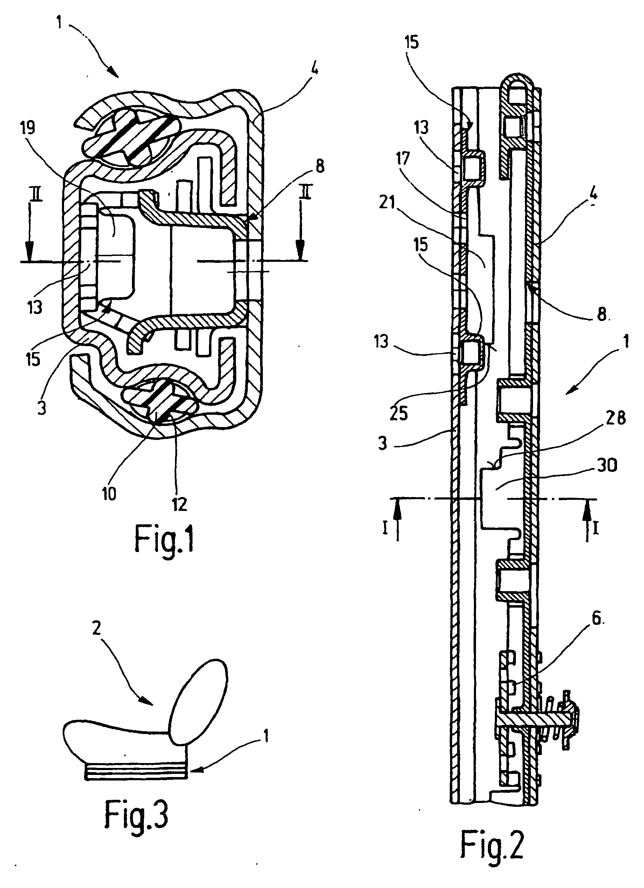

Im folgenden ist die Erfindung anhand eines in der Zeichnung dargestellten Ausführungsbeispiels näher erläutert. Es zeigen
- Fig. 1: einen Querschnitt durch das Ausführungsbeispiel entlang der Linie I-I in Fig. 2,
- Fig. 2: einen nur teilweise dargestellten Längsschnitt durch das Ausführungsbeispiel entlang der Linie II-II in Fig. 1,
- Fig. 3: eine schematische Darstellung eines Fahrzeugsitzes, und
- Fig. 4: einige beispielhafte Anschlagplatten.

Ein Längseinsteller 1 für einen längseinstellbaren Fahrzeugsitz 2, insbesondere für einen Kraftfahrzeugsitz, weist auf beiden Seiten des Fahrzeugsitzes 2 je eine fahrzeugstrukturfeste erste Sitzschiene 3 als Führungsschiene und eine sitzstrukturfeste zweite Sitzschiene 4 als Laufschiene auf. Jede zweite Sitzschiene 4 ist auf der zugehörigen ersten Sitzschiene 3 in Schienenlängsrichtung gleitend geführt und mittels einer Verriegelungsvorrichtung 6 in verschiedenen Sitzlängspositionen des Fahrzeugsitzes 2 lösbar verriegelbar. Ein an der zweiten Sitzschiene angebrachtes Verkrallungsteil 8 verstärkt die wechselseitige Verkrallung der beiden Sitzschienen 3 und 4. In Kugelkäfigen 10 angeordnete Kugeln 12 sorgen für eine möglichst geringe Reibung zwischen den beiden Sitzschienen 3 und 4 beim Verschieben.

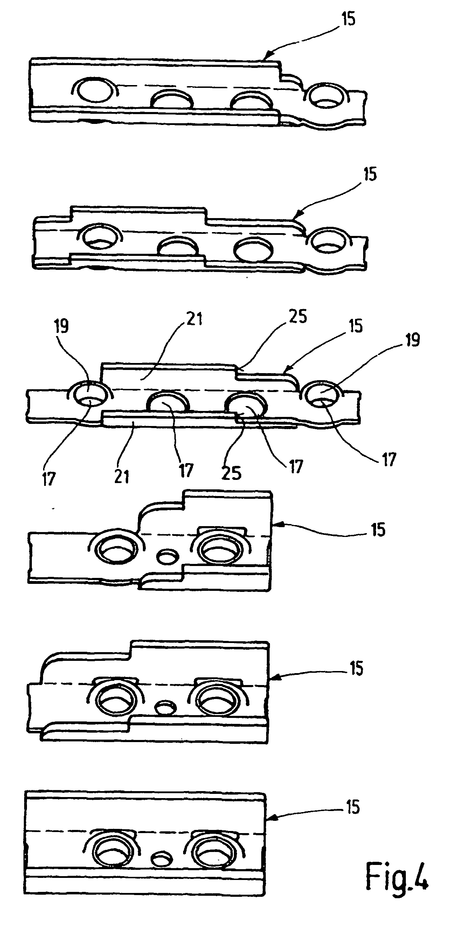

Die erste Sitzschiene 3 ist an Befestigungspunkten 13, die in Schienenlängsrichtung vorne und hinten vorgesehen sind, mit der Fahrzeugstruktur verbunden, vorzugsweise verschraubt. Zur Verstärkung an diesen Befestigungspunkten 13 und als Anschlag bei der Verschiebung der zweiten Sitzschiene 4 sind zwei Anschlagplatten 15 vorgesehen, von denen im folgenden die hintere Anschlagplatte 15 näher beschrieben ist. Die länglich ausgebildete Anschlagplatte 15 weist beispielsweise vorliegend vier in Schienenlängsrichtung aufgereihte Anschraublöcher 17 (s. Figur 4), im Ausführungsbeispiel mit Innengewinde, auf, von denen zwei in Durchzügen 19 ausgebildet sind, welche in das Innere des durch die beiden Sitzschienen 3 und 4 gebildeten Profils weisen.

Entlang ihrer beiden Längsränder sind an der Anschlagplatte 15 jeweils Laschen 21 angeformt, welche auf der in Schienenlängsrichtung ausgerichteten Stirnseite erste Anschlagflächen 25 aufweisen. Die Laschen 21 mit den ersten Anschlagflächen 25 können sich über die gesamte Länge der Anschlagplatte 15 oder - wie im vorliegenden Ausführungsbeispiel - nur über einen Teil derselben erstrecken. Die ersten Anschlagflächen 25 wirken als Endanschlag für die Bewegung der zweiten Sitzschiene 4 mit zweiten Anschlagflächen 28 zusammen, welche an Laschen 30 des Verkrallungsteils 8 auf der in Schienenlängsrichtung gewandten Seite ausgebildet sind.

In Schienenquerrichtung sind die ersten Anschlagflächen 25 und die zweiten Anschlagflächen 28 außermittig angeordnet, d.h. versetzt zu den Befestigungspunkten 13. Die zweiten Anschlagflächen 28 kommen daher nie in Kontakt mit Befestigungsmitteln, wie Schrauben oder dergleichen, welche an den Befestigungspunkten 13 in die Anschraublöcher 17 eingeschraubt oder anderweitig eingeführt werden. Die vordere Anschlagplatte 15 stimmt im wesentlichen mit der beschriebenen hinteren Anschlagplatte 15 überein, außer daß sie vorliegend kürzer ist und nur drei Anschraublöcher 17 aufweist.

Durch die zwei möglichen Orientierungen jeder Anschlagplatte 15 bei der Montage, durch eine Auswahl der Anschlagplatten 15 aus einem Satz von Anschlagplatten 15 eines modularen Systems, wie in Fig. 4 angedeutet, und durch die zu den Befestigungspunkten 13 versetzte Anordnung der Anschlagflächen 25 und 28 können unterschiedliche maximale Verschiebewege der zweiten Sitzschiene 4 und damit unterschiedliche Längseinstellbereiche unabhängig von der Anbindung der Anschlagplatte 15 definiert werden. Der Längseinsteller 1 ist daher mit geringen Änderungen bei der Montage für eine Vielzahl von Fahrzeugsitzen 2 einsetzbar.

### Bezugszeichenliste

- 1: Längseinsteller
- 2: Fahrzeugsitz
- 3: erste Sitzschiene
- 4: zweite Sitzschiene
- 6: Verriegelungsvorrichtung
- 8: Verkrallungsteil
- 10: Kugelkäfig
- 12: Kugel
- 13: Befestigungspunkt
- 15: Anschlagplatte
- 17: Anschraubloch
- 19: Durchzug
- 21: Lasche der Anschlagplatte
- 25: erste Anschlagfläche
- 28: zweite Anschlagfläche
- 30: Lasche des Verkrallungsteils

## Patentansprüche

1. Längseinsteller (1) für einen Fahrzeugsitz, insbesondere für einen Kraftfahrzeugsitz, mit einer ersten Sitzschiene (3), einer relativ zur ersten Sitzschiene (3) gleitend verschiebbaren zweiten Sitzschiene (4) und einem an der zweiten Sitzschiene (4) angebrachten Verkrallungsteil (8), **dadurch gekennzeichnet, dass** die erste Sitzschiene (3) eine Anschlagplatte (15) mit ersten Anschlagflächen (25) aufweist, welche mit zweiten Anschlagflächen (28) des Verkrallungsteils (8) zur Begrenzung der Bewegung der Sitzschiene (3, 4) zusammenwirken, wobei die Anschlagflächen (25, 28) in Schienenquerrichtung versetzt zu Befestigungspunkten (13) der Anschlagplatte (15) und/oder der ersten Sitzschiene (3) angeordnet sind.

2. Längseinsteller nach Anspruch 1, **dadurch gekennzeichnet, dass** die Anschlagplatte (15) an den Befestigungspunkten (13) mit der ersten Sitzschiene (3) verbunden ist.

3. Längseinsteller nach Anspruch 2, **dadurch gekennzeichnet, dass** die Anschlagplatte (15) an den Befestigungspunkten (13) fahrzeugstrukturfest angebracht ist.

4. Längseinsteller nach einem der Ansprüche 1 bis 3, **dadurch gekennzeichnet, dass** die Anschlagflächen (25, 28) an Laschen (21, 30) der Anschlagplatte (15) und/oder des Verkrallungsteils (8) ausgebildet sind.

5. Längseinsteller nach Anspruch 4, **dadurch gekennzeichnet, dass** die Laschen (21) der Anschlagplatte (15) entlang der Längsränder der Anschlagplatte (15) angeformt sind und zwischen sich einen Bereich mit in Schienenlängsrichtung hintereinander angeordneten Anschraublöchern (17) einschließen.

6. Längseinsteller nach einem der Ansprüche 1 bis 5, **dadurch gekennzeichnet, dass** die Anschlagplatte (15) aus einem Satz von unterschiedlichen Anschlagplatten (15) auswählbar ist.

7. Längseinsteller nach einem der Ansprüche 1 bis 6, **dadurch gekennzeichnet, dass** die Anschlagplatte (15) in unterschiedlicher Orientierung bezüglich der Schienenlängsrichtung anbringbar ist.

8. Längseinstellbarer Fahrzeugsitz (2), **gekennzeichnet durch** einen Längseinsteller (1) nach einem der Ansprüche 1 bis 7.

## Claims

1. Longitudinal adjuster (1) for a vehicle seat, in particular for motor vehicle seat, with a first seat rail (3), a second seat rail (4) adapted for sliding movement relative to the first seat rail (3), and an engagement member (8) arranged on the second seat rail (4), **characterized in that** the first seat rail (3) comprises a stop plate (15) with first stop surfaces (25), which cooperate with second stop surfaces (28) of the engagement member (8) for limiting the movement of the seat rail (3, 4) wherein in the transverse direction of the rails, the stop surfaces (25, 28) are arranged in offset relationship with the mounting points (13) of the stop plate (15) and/or the first seat rail (3).

2. Longitudinal adjuster according to claim 1, **characterized in that** the stop plate (15) is joined to the first seat rail (3) in the mounting points (13).

3. Longitudinal adjuster according to claim 2, **characterized in that** the stop plate (15) is secured to the vehicle structure in mounting points (13).

4. Longitudinal adjuster according to any one of claims 1 to 3, **characterized in that** the stop surfaces (25, 28) are formed respectively on lugs (21, 30) of the stop plate (15) and/or the engagement member (8).

5. Longitudinal adjuster according to claim 4, **characterized in that** the lugs (21) of the stop plate (15) are formed along the longitudinal edges of the stop plate (15), and include between them screw holes (17) that are successively arranged in the longitudinal direction of the rails.

6. Longitudinal adjuster according to any one of claims 1 to 5, **characterized in that** the stop plate (15) can be selected from a set of different stop plates (15).

7. Longitudinal adjuster according to any one of claims 1 to 6, **characterized in that** the stop plate (15) can be mounted with a different orientation relative to the longitudinal direction of the rails.

8. Longitudinally adjustable vehicle seat (2) **characterized by** a longitudinal adjuster (1) according to any one of claims 1 to 7.

## Revendications

1. Dispositif de réglage longitudinal (1) pour un siège de véhicule, en particulier pour un siège de véhicule automobile, comportant un premier rail de siège (3), un deuxième rail de siège (4) déplaçable par coulissement par rapport au premier rail de siège (3) et une partie d'accrochage (8) rapportée sur le deuxième rail de siège (4), **caractérisé par le fait que** le premier rail de siège (3) présente une plaque de butée (15) avec des premières surfaces de butée (25), lesquelles coopèrent avec des deuxièmes surfaces de butée (28) de la partie d'accrochage (8) pour limiter le déplacement des rails de siège (3, 4), les surfaces de butée (25, 28) étant disposées dans la direction transversale des rails décalées par rapport aux points de fixation (13) de la plaque de butée (15) et/ou du premier rail de siège (3).

2. Dispositif de réglage longitudinal selon la revendication 1, **caractérisé par le fait que** la plaque de butée (15) est reliée par les points de fixation (13) au premier rail de siège (3).

3. Dispositif de réglage longitudinal selon la revendication 2, **caractérisé par le fait que** la plaque de butée (15) est fixée aux points de fixation (13) de façon solidaire de la structure du véhicule.

4. Dispositif de réglage longitudinal selon l'une des revendications 1 à 3, **caractérisé par le fait que** les surfaces de butée (25, 28) sont formées sur des languettes (21, 30) de la plaque de butée (15) et/ou de la partie d'accrochage (8).

5. Dispositif de réglage longitudinal selon la revendication 4, **caractérisé par le fait que** les languettes (21) de la plaque de butée (15) sont formées le long des bordures longitudinales de la plaque de butée (15) et enferment entre elles une zone avec des trous de vissage (17) disposés l'un derrière l'autre dans la direction de la longueur des rails.

6. Dispositif de réglage longitudinal selon l'une des revendications 1 à 5, **caractérisé par le fait que** la plaque de butée (15) est sélectionnable à partir d'un ensemble de différentes plaques de butée (15).

7. Dispositif de réglage longitudinal selon l'une des revendications 1 à 6, **caractérisé par le fait que** la plaque de butée (15) est apte à être rapportée dans une orientation différente par rapport à la direction longitudinale des rails.

8. Siège de véhicule (2) réglable en longueur, **caractérisé par** un dispositif de réglage longitudinal (1) tel que défini à l'une des revendications 1 à 7.
